(19) Europäisches Patentamt
European Patent Office
Office européen des brevets

(11) **EP 3 232 221 A1**

(12) **EUROPÄISCHE PATENTANMELDUNG**

(43) Veröffentlichungstag:
**18.10.2017   Patentblatt 2017/42**

(21) Anmeldenummer: **17164801.7**

(22) Anmeldetag: **04.04.2017**

(51) Int Cl.:
**G01S 5/02** (2010.01)     **G01C 21/20** (2006.01)
**G01S 19/48** (2010.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **12.04.2016   EP 16164967**

(71) Anmelder: **MAGNA STEYR Fahrzeugtechnik AG & Co KG**
**8041 Graz (AT)**

(72) Erfinder:
• **GROSSWINDHAGER, Bernhard**
  **8010 Graz (AT)**
• **MODER, Thomas**
  **8047 Graz (AT)**
• **STABENTHEINER, Gabriel**
  **8111 Judendorf-Strassengel (AT)**
• **WILFINGER, Roman**
  **8010 Graz (AT)**

(74) Vertreter: **Zangger, Bernd**
**Magna International Europe GmbH**
**Patentabteilung**
**Liebenauer Hauptstraße 317**
**8041 Graz (AT)**

(54) **POSITIONSBESTIMMUNGSSYSTEM**

(57)    Ein Positionsbestimmungssystem, zur Bestimmung der Position eines Fahrzeuges in einem Innenraum, umfassend einen mit dem Fahrzeug beweglichen Bluetooth-Empfänger, eine Anzahl von im Innenraum verteilten Bluetooth-Sendern und eine Positionsbestimmungsvorrichtung, wobei die Positionsbestimmungsvorrichtung dazu eingerichtet ist, eine Absolutposition des Fahrzeuges durch eine Analyse des am Bluetooth-Empfänger empfangenen Signals der Anzahl von im Innenraum verteilten Bluetooth-Sender zu bestimmen, eine Relativposition des Fahrzeuges mittels Sensorwerten der Dynamik des Fahrzeugs zu bestimmen und eine Gesamtposition des Fahrzeuges als Kombination der Absolutposition und der Relativposition zu bestimmen.

Fig. 1

**Beschreibung**

**Gebiet der Erfindung**

Die vorliegende Erfindung betrifft ein Positionsbestimmungssystem, zur Bestimmung der Position eines Fahrzeuges in einem Innenraum.

**Stand der Technik**

Positionsbestimmungssysteme zur Bestimmung der Position eines Fahrzeuges im Freien, insbesondere auf Straßen, sind seit längerer Zeit bekannt und weit verbreitet. Weitaus schwieriger ist die Bestimmung der Position in einem Innenraum, in welchem üblicherweise GNSS (Global Navigation Satellite System) bzw. GPS (Global Positioning System) Signale nur unzuverlässig oder gar nicht empfangen werden können.

Insbesondere für den Einsatz in Fahrzeugen die automatisiert gesteuert werden und beispielsweise automatisiert in Tiefgaragen oder Parkhäusern geparkt werden sollen, ist eine genaue und zuverlässige Positionsbestimmung jedoch unerlässlich.

Zur Positionsbestimmung in Innenräumen sind auch schon verschiedene Systeme bekannt, die zum Beispiel optische Kameras oder LiDAR (Light Detection and Ranging) zur Erfassung der Umgebung verwenden und bei eingeschränkten Sichtbedingungen nur bedingt einsetzbar sind. Auch ist eine Positionsbestimmung mittels UWB (Ultra Wide Band) Systemen bekannt, die jedoch recht aufwändig und kostspielig sind.

Eine Positionsbestimmung mittels Bluetooth-Sendern, insbesondere Bluetooth Low-Energy Knoten bzw. "Baken", und Bluetooth-Empfängern kann so erfolgen, dass eine Anzahl von Bluetooth-Sendern in einem bestimmten Bereich - insbesondere in einem gewünschten Innenraum - verteilt werden und daraufhin an verschiedenen Referenzpunkten empfangene Signalstärken (RSSI) gemessen und aufgezeichnet werden. Diese aufgezeichneten Referenzmuster - auch "fingerprints" genannt - können später zur Bestimmung der Position eines bestimmten Fahrzeuges verwendet werden, in dem die Referenzmuster mit der an einem Bluetooth-Empfänger des Fahrzeugs empfangenen Signalstärke verglichen werden. Auf diese Weise kann eine Absolutposition im Bereich der verteilten Bluetooth-Sender ermittelt werden, wobei die ermittelten Werte jedoch je nach Position des Fahrzeuges und Qualität der Messdaten mehrdeutig sein können und bei bewegten Fahrzeugen zu großen kurzzeitigen Schwankungen der ermittelten Positionen führen können.

**Zusammenfassung der Erfindung**

Es ist eine Aufgabe der Erfindung, ein Positionsbestimmungssystem, zur Bestimmung der Position eines Fahrzeuges in einem Innenraum anzugeben, das eine zuverlässige und genau Positionsbestimmung ermöglicht.

Die Lösung der Aufgabe erfolgt durch ein Positionsbestimmungssystem, zur Bestimmung der Position eines Fahrzeuges in einem Innenraum, umfassend einen mit dem Fahrzeug beweglichen Bluetooth-Empfänger, eine Anzahl von im Innenraum verteilten Bluetooth-Sendern und eine Positionsbestimmungsvorrichtung, wobei die Positionsbestimmungsvorrichtung dazu eingerichtet ist, eine Absolutposition des Fahrzeuges durch eine Analyse der am Bluetooth-Empfänger empfangenen Signale der Anzahl von im Innenraum verteilten Bluetooth-Sender zu bestimmen, eine Relativposition des Fahrzeuges mittels Sensorwerten der Dynamik des Fahrzeugs zu bestimmen und eine Gesamtposition des Fahrzeuges als Kombination der Absolutposition und der Relativposition zu bestimmen.

Erfindungsgemäß werden die möglichen großen Schwankungen einer absoluten Positionsbestimmung mittels Bluetooth-Fingerprinting System durch eine Kopplung mit einer relativen Positionsbestimmung reduziert. Die relative Position des Fahrzeuges wird anhand von gemessenen Daten der Fahrzeugdynamik bestimmt, insbesondere an Hand einer Gierrateninformation und/oder Geschwindigkeitsinformation des Fahrzeuges, die beispielsweise aus einem CAN-Bus-System des Fahrzeuges ausgelesen werden können. Aus solchen - typischerweise in einem Standard CAN Bus-System bereits vorhandenen - Sensorwerten der Dynamik kann jeweils eine zur Vorepoche relative Bewegungsrichtung und zurückgelegte Wegstrecke des Fahrzeuges ermittelt werden (Koppelnavigation), die in Ergänzung zur absoluten Positionsbestimmung kurzzeitige Änderungen der Fahrzeugbewegung gut wiedergeben kann, aber für längerfristige Positionsbestimmungen, auf Grund ständig zunehmender Abweichung von der tatsächlichen Position, unzuverlässig ist. Beide Methoden werden erfindungsgemäß kombiniert um eine optimale tatsächliche Position des Fahrzeuges zu bestimmen. Eine derartige Kombination kann insbesondere mittels einer an sich bekannten Kalman- oder einer Partikelfilterung erfolgen.

Eine erfindungsgemäße Positionsbestimmung in einem Innenraum kann beispielsweise automatisiert aktiviert werden, wenn ein Empfang eines ansonsten verwendeten GNSS oder GPS-Positionierungssystems, zum Beispiel bei Einfahrt in eine Garage, abreißt, so dass auch eine annähernd lückenlose Positionsbestimmung im Freien und in Innenräumen möglich wird.

Vorzugsweise umfassen die Sensorwerte der Dynamik des Fahrzeugs eine Gierrateninformation des Fahrzeuges und/oder eine Fahrzeuggeschwindigkeit. Auf Basis dieser einfachen Dynamikdaten kann ausgehend von einer bekannten Position eine darauffolgende Position zu einem wenig späteren Zeitpunkt ermittelt werden.

Die Sensorwerte der Dynamik des Fahrzeugs werden bevorzugt aus einem CAN-Bus-System, insbesondere einem Standard-CAN-Bus-System des Fahrzeuges ausgelesen, so dass vorzugsweise gewöhnliche CAN-Bus-Daten bzw. im Fahrzeug vorhandene Daten zur Positionsbestimmung genutzt werden.

Die Analyse der empfangenen Signale der Anzahl von im Innenraum verteilten Bluetooth-Sendern umfasst vorzugsweise einen Vergleich der empfangenen Signalstärke mit zuvor aufgezeichneten Referenz-Signalstärken an unterschiedlichen vorgegebenen Positionen im Innenraum, also mit einem zuvor aufgezeichneten Referenzmuster empfangener Signalstärken.

Die Anzahl von im Innenraum verteilten Bluetooth-Sendern sind bevorzugt Bluetooth-Niedrig-Energie-Sender bzw. Bluetooth Low Energy-Sender, also sogenannte "Bluetooth Low Energy (BLE) Beacons", bevorzugt wie im Bluetooth 4.0 Standard oder nachfolgenden Standards definiert.

Die Kombination der Absolutposition und der Relativposition wird vorzugsweise mittels eines Kalmanfilters oder eines Partikelfilters durchgeführt. Ein solches Partikelfilter kann insbesondere durch eine Rasterkarte des gewünschten Innenraums definiert werden. Die Kombination der Absolutposition und der Relativposition kann also mittels eines Partikelfilters durchgeführt werden, wobei Rasterkarten des Innenraums als zusätzliche "Beobachtungsgrößen" - zusätzlich zu zumindest einem der Sensorwerte der Dynamik des Fahrzeugs - im Partikelfilter verwendet werden.

Das Positionsbestimmungssystem kann einen mit dem Fahrzeug beweglichen GNSS- oder GPS-Empfänger umfassen und die Positionsbestimmungsvorrichtung dazu eingerichtet sein, die Position des Fahrzeuges im Freien mittels der vom GNSS- oder GPS-Empfänger empfangenen Daten in Kombination mit der Relativposition aus der Fahrzeugsensorik zu bestimmen und die Position des Fahrzeuges in einem Innenraum als Kombination der Absolutposition, beispielsweise aus Bluetooth-Fingerprinting, und der Relativposition, beispielsweise aus der Fahrzeugsensorik, zu bestimmen. Somit ist mit dem Positionsbestimmungssystem eine genaue und beispielsweise annähernd nahtlose Positionsbestimmung im Freien und in Innenräumen möglich.

**Kurzbeschreibung der Zeichnungen**

Die Erfindung wird im Folgenden beispielhaft unter Bezugnahme auf die Zeichnungen beschrieben.

Fig. 1    ist eine schematische Darstellung einer absoluten Positionsbestimmung mittels einer Anzahl von in einem Innenraum verteilten Bluetooth-Sendern.

Fig. 2    ist eine Darstellung des Zusammenhangs zwischen empfangener Signalstärke und Entfernung von einem Bluetooth-Sender.

Fig. 3    zeigt eine schematische Darstellung eines Innenraums mit Fingerprinting-Infrastruktur und Teststrecke.

Fig. 4    zeigt die Genauigkeit eines BLE Fingerprintings im Vergleich zu einem tachymetrischen Tracking eines Testfahrzeuges.

Fig. 5    zeigt verschiedene Radgeschwindigkeiten eines Fahrzeuges in einem Kreisverkehr. Das Insert rechts unten zeigt einen Überblick über den Kreisverkehr.

Fig. 6    zeigt schematisch einen Kalman-Filter-Prozess zur Positionsbestimmung.

Fig. 7    zeigt die Ergebnisse einer Kalman-Filterung nach drei Runden auf der Innenraum-Teststrecke gemäß Fig. 3.

Fig. 8    zeigt die Ergebnisse einer Partikel-Filterung nach drei Runden auf der Innenraum-Teststrecke gemäß Fig. 3.

Fig. 9    zeigt Positionierungsfehler für BLE-Fingerprinting, Koppelnavigation, Kalman-Filter und Partikelfilter.

**Detaillierte Beschreibung der Erfindung**

Die vorliegende Erfindung beschreibt ein System zur Positionsbestimmung von Fahrzeugen in Innenbereichen, wie Parkhäusern oder Tiefgaragen. Durch Kombination einer mit Bluetooth-Signalstärken arbeitenden Location-Fingerprinting-Technik als absolutes Positionierungssystem und eines Fahrzeugsensordaten, insbesondere Geschwindigkeiten und Drehraten, verwendenden relativen Ortungssystems in einer gemeinsamen Filtervorrichtung wird eine standortunabhängige, stabile Fahrzeugpositionierung verfügbar gemacht. Zur Kombination und Filterung können sowohl ein Kalman-Filter als auch ein Partikelfilter verwendet werden. Durch die zusätzliche Einbeziehung von in Außenbereichen erhaltenen Signalen von globalen Satellitennavigationssystemen (GNSS), insbesondere durch ein übliches GPS-Navigationssystem, kann ein nahtloser Übergang der Positionierung zwischen Außen- und Innenbereich erhalten werden. Mit den hier vorgestellten Techniken kann mit geringem finanziellem Einsatz eine Präzision von kleiner als 2 m erhalten werden.

Globale Navigationssatellitensysteme (GNSS) werden in bereits bekannter Weise und in großem Umfang zur Fahrzeugnavigation eingesetzt. Trotz ihrer globalen Nutzbarkeit sind GNSS-Signale in Bereichen, in denen ihr Weg behindert wird, wie in dicht bebauten Stadtgebieten oder in Innenräumen nicht oder nur in unzuverlässiger Form verfügbar. Als Beispiele solcher Innenbereich-Szenarien können Straßentunnels oder kompliziertere Bereiche wie Parkhäuser oder Tiefgaragen genannt werden. Ist in Letzteren ein präzises und zuverlässiges Innenbereich-Positionierungssystem verfügbar, so kann ein autonomer Parkpilot eingerichtet werden, der das Fahrzeug selbsttätig durch das Gebäude und die verschiedenen Parkbereiche zu einem unbelegten Parkplatz führt. Es gibt jedoch keine standardisierten, ortsunabhängigen Positionierungsmethoden für Szenarien dieser Art, in denen GNSS-Signale behindert sind und alternative Sensoren oder Methoden einbezogen werden müssen.

Die vorliegende Erfindung beschreibt ein Innenbereich-Positionierungssystem, das ein auf der Funktechnik "Bluetooth Low Energy" (BLE) basierendes sogenanntes "Location-Fingerprinting" zur Bestimmung einer Absolutposition mit einer Koppelnavigation zur Bestimmung einer Relativposition eines Bluetooth-Empfängers kombiniert, die mit von Standard-Fahrzeugsensoren über ein Fahrzeug-Datenbussystem, beispielsweise über den CAN-Bus des Fahrzeugs (Controller Area Network), erhaltene Daten, wie insbesondere Drehwinkel und / oder Raddrehzahlen und /oder Beschleunigungen und / oder Geschwindigkeit, arbeitet.

Bei Letzterem werden die Geschwindigkeiten der einzelnen Fahrzeugräder, das heißt, die horizontale Verschiebungsgeschwindigkeit ihres Radmittelpunkts längs der Fahrbahn, gemessen. Die beiden Komponenten werden unter Verwendung eines Kalman-Filters kombiniert oder wahlweise - bei Einbeziehung der Gebäudestruktur - mittels eines Partikelfilters.

Das System wird auch im Rahmen eines realistischen Szenarios beschrieben, wobei ein Testfahrzeug in ein großes öffentliches Parkhaus einfährt und sich dann innerhalb dieses Gebäudes auf einem vorbestimmten Weg weiter bewegt. Während des gesamten Befahrens der Testbahn (das heißt im Freien, im Übergangsbereich und im Gebäude) wird die Position des Testfahrzeugs nahtlos bestimmt.

Die Innenbereich-Positionierung mittels Location-Fingerprinting mit BLE als Bestimmung einer Absolutposition wird im Folgenden näher beschrieben, danach werden verfügbare Fahrzeugsensoren, ein CAN-Bus und eine Schnittstelle für den Zugang zu verschiedenen Messungen beschrieben. Die Integration von Fingerprinting- und CAN-Bus-Daten mittels Kalman- und Partikelfilter wird anschließend im Detail ausgeführt.

Während zur Positionierung in Außenbereichen vorherrschend die GNSS-Ortung ("GPS") eingesetzt wird, gibt es für Innenbereich-Anwendungen kein entsprechend dominierendes Verfahren. Eine standardisierte, standortunabhängige Methode zur Innenbereich-Positionierung ist bisher nicht bekannt.

Für Innenbereich-Navigation nutzbare Signale können in künstliche und natürlich verfügbare Signale unterteilt werden. Künstliche Signale sind menschlichen Ursprungs, zum Beispiel Funksignale oder GNSS-Signale. Natürliche Signale sind auf Grund gewisser Naturerscheinungen, wie Magnetfelder, vorhanden. Zur Innenbereich-Positionierung, wo nicht genügend Signale ortsunabhängiger Art verfügbar sind, werden allgemein mit optischen Methoden arbeitende Baken, Satellitensignale beispielsweise GNSS-Satelliten nachahmende Pseudolites und auf Radar oder Ultra-Breitband-Technologie (UWB) basierende Baken eingesetzt. Mit zahlreichen dieser Methoden können Positionsgenauigkeiten in der Größenordnung von Dezimetern oder gar Zentimetern erzielt werden, je nach vorliegender Infrastruktur und Anzahl eingesetzter Baken. Allgemein gut arbeiten optische Systeme bei Vorliegen freier Sichtlinien. Zudem wurden zahlreiche, mit Ultra-Breitband-Frequenzen arbeitende, meist auf dem Chipsatz der Firma DecaWave basierende Innenbereich-Positionierungssysteme verfügbar gemacht. Alle erwähnten Systeme haben jedoch den wesentlichen Nachteil, dass sie Signale benötigen, die nicht standardmäßig vorhanden sind, sondern von per Hand einzurichtenden Baken geliefert werden. Je nach System kann dies viel Zeit und auch finanziellen Aufwand erfordern.

Ein WLAN- oder Bluetooth-Fingerprinting nutzendes System hingegen basiert auf einem Zugangspunkt (Access Point) oder einer Bake für WLAN oder BLE. In zahlreichen Innenbereich-Szenarien sind solche Vorrichtungen bereits gemäß dem Internet der Dinge als Hotspots (drahtlose Zugriffspunkte) oder einfache Objekte, soweit sie räumlich stabil sind, vorhanden. Sollten zusätzliche Baken benötigt werden, so hat die Funktechnik "Bluetooth Low Energy" (BLE) den Vorteil, dass ihre Baken einen sehr niedrigen Stromverbrauch aufweisen und allein mit Standard-Batterien, beispielsweise gewöhnliche 3 V Batterien, bis zu drei Jahre arbeiten können. Trotz der Tatsache, dass sich Bluetooth wegen seines instabilen Verhaltens überhaupt nicht dazu eignet, aus Signalstärken Entfernungen zu berechnen, kann es bei entsprechend großer Signalverfügbarkeit bzw. Anzahl von Signalen zur Positionierung mittels der Fingerprinting-Methode genutzt werden.

In der vorliegenden Erfindung werden vor allem deshalb BLE eingesetzt, weil Bluetooth-Empfänger in neueren Fahrzeugen bereits vorhanden sind und über die Fahrzeug-Schnittstelle angesprochen werden können. Es ist deshalb möglich, das hier beschriebene Bluetooth-Fingerprinting nur mit üblichen Fahrzeugsensoren und direkt innerhalb des Fahrzeug-Computersystems durchzuführen.

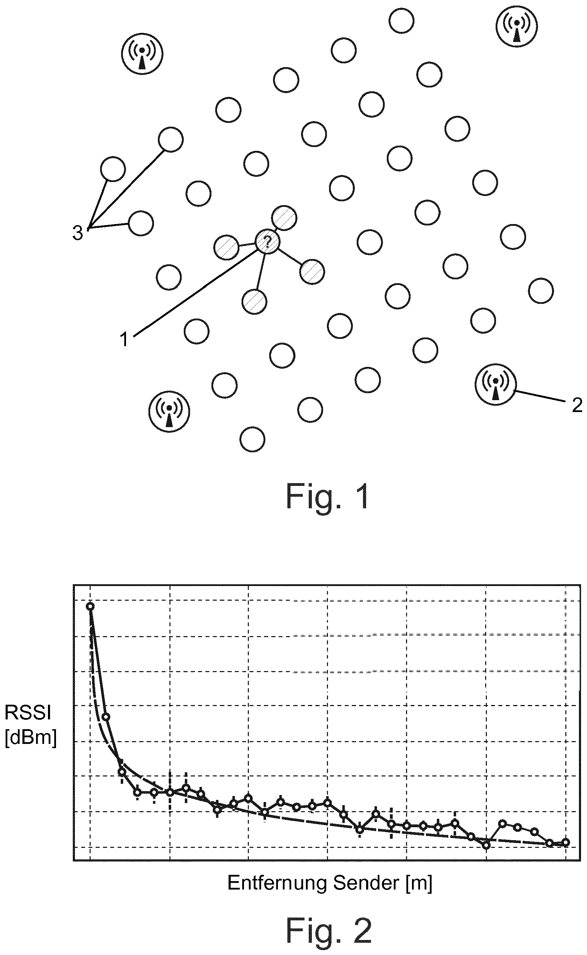

Location-Fingerprinting wird für die vorliegenden Untersuchungen als Positionierungstechnik bevorzugt, da es als beste Annäherung zur absoluten Innenbereich-Positionierung angesehen wird und anderen auf Pfadverlusten basierenden Methoden deutlich überlegen ist. Beim Fingerprinting - siehe hierzu Fig. 1 - wird die Position durch Vergleich aktueller Signalstärkemuster - nämlich eines an einem Bluetooth-Empfänger 1 empfangenen Signals einer Anzahl von im Innenraum verteilten Bluetooth-Sendern 2 - mit zuvor an Bezugspunkten gemessenen als "Fingerprints" bezeichneten Signalstärkemustern - also mit Referenz-Signalstärkemustern an unterschiedlichen vorgegebenen Positionen 3 im Innenraum - erhalten. Letztere werden willkürlich in geeigneter Dichte über den Bereich verteilt, in dem später die Positionierung vorgenommen werden soll. Die Gesamtheit der gespeicherten Fingerprints wird als "Radio-Map" bezeichnet.

Wie in Fig. 2 dargestellt, ist bekannt, dass die empfangene Signalstärke (RSSI) von einem Bluetooth Sender (Beacon) 2 mit der Entfernung von diesem abnimmt. Die modellbasierte theoretische Kurve ist die gestrichelte Linie in Fig. 2. Eine Bestimmung von Distanzen ist daher an sich mittels "path loss" Modellen möglich. Allerdings verschlechtern zum Beispiel Hindernisse und Signalschwankungen das Ergebnis maßgebend. Eine gemessene Verlustlinie ist durch die mit Strichen verbundenen Messpunkte in Fig. 2 eingezeichnet.

Das Fingerprinting selbst wird in zwei Phasen unterteilt, eine Offline-Phase, in deren Verlauf die Fingerprints gemessen werden, und eine Online-Phase, während der die tatsächliche Positionierung stattfindet.

Offline-Phase: Für jeden Bezugspunkt werden dessen Koordinaten und die von allen Access-Points erhaltenen Signalstärken gemessen und gespeichert. Je nach Größe des Zielbereichs und der Dichte der Bezugspunkte kann die Erstellung der Radio-Map sehr viel Zeit beanspruchen.

Online-Phase: An einer unbekannten Position P(x, y) wird der Empfangsfeldstärkeindikator (RSSI) aller Access-Points Hi gemessen und in einem Vektor $\vec{r}_P$ von N Access-Points gespeichert:

$$\vec{r}_P = \begin{pmatrix} \mathrm{RSSI}_{(H_1,P)} \\ \mathrm{RSSI}_{(H_2,P)} \\ \vdots \\ \mathrm{RSSI}_{(H_N,P)} \end{pmatrix}.$$

Dieses Signalmuster wird dann mit den Mustern der einzelnen, in der Radio-Map gespeicherten Fingerprints verglichen. Bei diesem Vergleich werden die naheliegendsten Nachbarn bestimmt, wobei sich der Begriff "nahe" hier auf große Ähnlichkeit des Signalmusters der unbekannten Position und dem Fingerprint $\vec{r}_i$ bezieht.

Um diese Ähnlichkeit mathematisch auszudrücken, sind verschiedene Maßstäbe verwendbar. Im allgemeinsten Fall wird die euklidische Norm oder $L_2$-Norm verwendet:

$$D_i = \|\vec{r}_P - \vec{r}_i\|_2 = \sqrt{\sum_{n=1}^{N} (r_{P,n} - r_{i,n})^2}$$

Die Liste der Bezugspunkte wird nun umgeordnet und in aufsteigender Reihenfolgen hinsichtlich ihres berechneten Abstands Di notiert, wonach der als der Beste beurteilte Bezugspunkt als erster der Liste erscheint. Im einfachsten Fall werden die Koordinaten des obersten Bezugspunkts dieser Liste (des nächsten Nachbarn) als die Koordinaten der unbekannten Position genommen. Bei einem etwas ausgefeilteren Ansatz wird ein gewichteter Mittelwert der K nächsten Nachbarn (besten Bezugspunkte) berechnet, was als "Weighted K Nearest Neighbors"-Fingerprinting (WKNN) bezeichnet wird.

$$\vec{x}_{\mathrm{WKNN}} = \sum_{i=1}^{K} \frac{1}{D_i} \vec{x}_i \cdot \left( \sum_{i=1}^{K} \frac{1}{D_i} \right)^{-1}.$$

Beste Ergebnisse werden allgemein durch die Mittelung von K = 4 Bezugspunkten erhalten. Alle nach verschiedenen Normen durchgeführten Entfernungsberechnungen weisen einen gemeinsamen möglichen Schwachpunkt auf, der in der Tatsache besteht, dass nur Beobachtungen berücksichtigt werden, die sowohl im Fingerprint, als auch der aktuellen Position gemacht werden, was die Entfernungsberechnung verfälschen kann.

Ein einfaches Beispiel soll dies verdeutlichen. Wenn eine Radio-Map mit zwei Bezugspunkten R1 und R2 vorliegt, gilt beispielsweise folgendes: Während der Online-Phase werden dann Beobachtungen zu verschiedenen Access-Points am unbekannten Punkt P aufgezeichnet - siehe Beispiel in der folgenden Tabelle - die fiktive Beobachtungen für einen unbekannten Punkt P und zwei Bezugspunkte zu sieben verschiedenen Access-Points zeigt. In diesem Beispiel teilt P vier gemeinsame Access-Points mit R1, während nur ein gemeinsamer Access-Point für P und R2 beobachtet wird.

| Access-Point | P [dBm] | R1 [dBm] | R2 [dBm] |
|---|---|---|---|
| AP1 | -76 | -73 | |
| AP2 | -80 | -78 | |
| AP3 | -67 | -69 | |
| AP4 | -89 | -90 | -93 |
| AP5 | | | -81 |
| AP6 | | | -83 |
| AP7 | | | -63 |
| Abstand ($l^2$) zu P | | **4,24** | **4,00** |

Sollte man sich gefühlsmäßig dafür entscheiden, welcher Bezugspunkt P am nächsten kommt, so würde die Wahl zweifelsohne auf R1 fallen. Die Berechnung des Abstands nach der $\ell^2$-Norm gibt jedoch R2 Vorrang. Dies liegt daran, dass die Berechnung des Abstands von R2 ausschließlich auf AP4, dem einzigen gemeinsamen Access-Point, beruht. Es muss deshalb die Anzahl gemeinsamer Access-Points (oder auch die Anzahl verschiedener Access-Points) berücksichtigt werden, um fehlerhafte Zuordnungen zu Bezugspunkten zu vermeiden.

Eine Lösung zur Vermeidung dieses Problems kann auf folgende Weise realisiert werden: Jeder Bezugspunkt Ri wird durch einen Satz von Scheinbeobachtungen ergänzt. Jedem nicht in der Radio-Map aufgezeichneten Access-Point wird hierbei eine Scheinbeobachtung von - 100 dBm beigefügt. Für das Beispiel der oben dargestellten Tabelle würde hiermit für den Abstand zu R2 ein Wert von 45,62 erhalten werden. Somit wird nun der vermeintlich richtige Fingerprint (R1) gewählt. Ein anderes Verfahren kann darin bestehen, die Gewichtung von Ri für jeden gemeinsamen Access-Point zu erhöhen und sie für jeden Access-Point, der in Ri, jedoch nicht in P beobachtet wird, zu senken.

Neben Fingerprinting, das auf mit nächsten Nachbarn arbeitenden Algorithmen beruht, gibt es auch statistische Positionierungsmethoden, die mit bedingten Wahrscheinlichkeiten arbeiten. Anders ausgedrückt, soll hier die Aufenthaltswahrscheinlichkeit basierend aus Beobachtungen an der unbekannten Position hergeleitet werden. Nach dem Satz von Bayes kann die Wahrscheinlichkeit, dass sich jemand unter der Bedingung vorgegebener Beobachtungen $\vec{r}_P$ an einer gewissen Position befindet, berechnet werden.

Die Fähigkeiten des Fingerprinting mit BLE wurden in einer Reihe von Versuchsdurchführungen, nämlich Testfahrten, bewertet. Hierzu wurde in einem öffentlichen Parkhaus ein umfangreicher Prüfbereich eingerichtet. Jeder Stock ist durch Betonwände in drei Abschnitte unterteilt und jede solche Wand weist drei breite, offene Brandschutztore auf. Zusätzlich verfügt jeder Stock über einen abgesenkten Bereich, der über insgesamt vier Einbahnrampen zwischen benachbarten Stockwerken die Verbindung zum Hauptgeschoss herstellt. Auf dem fünften Stock des Gebäudes und seines abgesenkten Bereichs wurden gleichmäßig insgesamt 60 BLE-Baken verteilt. Es wurde eine 538 Referenzpunkte umfassende Radio-Map aufgenommen. Jeder Fingerprint wurde mittels einer 30-Sekunden-RSSI-Messung erhalten, wodurch kurzzeitig grobe Ausreißer eliminiert wurden.

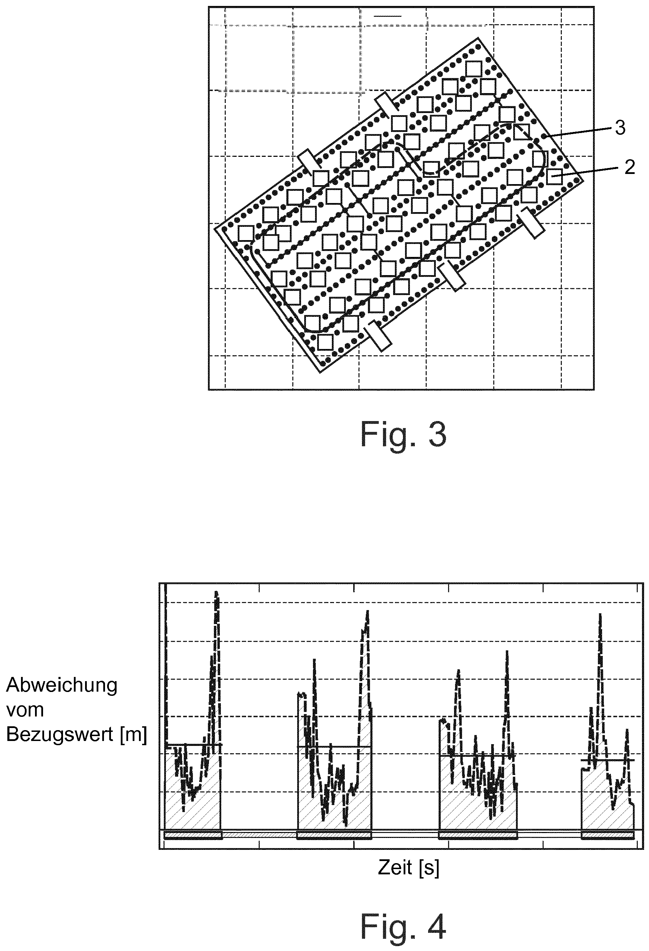

Fig. 3 zeigt den Grundriss des Parkhauses und die für die Prüfungen vorgenommenen Einrichtungen, nämlich die Bluetooth-Sender 2 (Bakens) als Quadrate und die Positionen 3 zur Aufzeichnung von Referenz-Signalstärkemustern (Fingerprints) als Punkte. Es wird auch die Prüfbahn bzw. Teststrecke gezeigt, wobei die durchgezogene Linie den angenommenen Fahrverlauf darstellt. Zur Verifikation der Positionierungsergebnisse werden eine Leica Nova MS50 MultiStation (Totalstation) und ein auf dem Dach des Fahrzeugs montierter 360°-Reflektor verwendet. Hiermit ist es möglich, das Fahrzeug bei Sichtverbindung automatisch anzuvisieren und somit kontinuierlich dessen Position mit hoher Genauigkeit (einige Millimeter) zu bestimmen.

Fig. 4 zeigt die Fehler des Fingerprintings bezüglich der tachymetrischen Verfolgung von drei aufeinanderfolgenden Runden auf der in Fig. 3 gezeigten Prüfbahn. Es wurden auf Grund fehlender Sichtverbindung nur auf ungefähr der Hälfte der Prüfbahn Referenzwerte gemessen. Der durch einen dünnen waagrechten Strich angezeigte mittlere Fehler der einzelnen aufeinanderfolgenden Abschnitte ändert sich bei den einzelnen Runden nur unwesentlich. Innerhalb der Runden zeigt die Präzision jedoch starke Schwankungen, die mit gewissen Orten des Testbereichs korreliert sind. Dies bedeutet, dass die Präzision in gewissen Abschnitten wesentlich besser ist als in anderen, was bei allen durchgeführten Testfahrten gleichbleibend beobachtet wird. Dieses Verhalten ist der Aufnahme der Radio-Map geschuldet, bei der in den entsprechenden Bereichen vermutlich grob unterschiedliche Umgebungsbedingungen vorgeherrscht haben.

Bei vielfachen Testfahrten an verschiedenen Tagen wurde ein ähnliches Muster für die räumliche Fehlerverteilung gefunden, das den Ergebnissen von Fig. 4 entspricht.

Im Folgenden werden die in den meisten modernen Fahrzeugen eingesetzten Fahrzeugsensorsysteme, die erfindungsgemäß für Navigation und Positionierung verwendet werden können, beschrieben.

Zunächst zur CAN-Bus-Schnittstelle: Es gibt bei der Bus-Architektur eines Fahrzeugs verschiedene Anforderungen hinsichtlich der Datenrate. Die Werte erstrecken sich von einigen Bit/ s zum Einschalten der Frontscheinwerfer über einige 100 kBit/s für die Motorsteuerung bis hin zu mehreren MBit/s für Videoanwendungen. Aus diesem Grund sind verschiedene Fahrzeugbus-Standards in Verwendung, zum Beispiel LIN, MOST, CAN, Flex Ray, Ethernet und andere. Unter all diesen ist der 1991 veröffentlichte CAN 2.0 Standard immer noch der am häufigsten eingesetzte. Hauptgründe hierfür sind die billige verdrillte Zweidrahtleitung (CAN_L und CAN_H) und das einfache Protokoll. Es sind Datenraten von 125 kBit/s (Lowspeed-CAN) bis über 1 MBit/s (Highspeed-CAN) möglich, jedoch werden in typischen Fahrzeugarchitekturen 125 kBit/s und 500 kBit/s verwendet.

Zur kontinuierlichen Erfassung dynamischer Fahrzeugdaten war ein CAN-Datenlogger direkt mit dem Powertrain-CAN (500 kBit/s) verbunden. Die für Koppelnavigation relevanten Daten sind in der folgenden Tabelle enthalten.

| # | Beschreibung | Einheit | Bereich | Aktualisierungsrate |
|---|---|---|---|---|
| 1 | UTC-Zeitstempel | s | - | - |
| 2 | Fahrzeuggeschwindigkeit $v$ | km/h | 0 bis 320 | 20 ms |
| 3 | Drehrate $\dot{\psi}$ | °/s | -75 bis 75 | 20 ms |

Neben den in dieser Tabelle enthaltenen Spezifikationen wurden auch die Beschleunigung, die Drehzahlen der einzelnen Räder, Lenkrad-Daten und verschiedene Fahrzeugzustände aufgezeichnet. Heutzutage sind die meisten Fahrzeuge mit diesen Standardsensoren ausgerüstet, da sie für Fahrzeugsteuerungssysteme verwendet werden, wie der Fahrdynamikregelung (ESP) oder dem Antiblockiersystem (ABS). Zur Synchronisierung der Fahrzeugdaten mit den absoluten Positionierungsdaten wurde auch ein UTC-Zeitstempel registriert.

Sowohl die Fahrzeuggeschwindigkeit als auch die Drehrate werden alle 20 ms (mit Schwankungen zwischen $\Delta tmin = 18$ ms und $\Delta tmax = 22$ ms) aktualisiert. Zur Berechnung der Fahrzeuggeschwindigkeit wird der Mittelwert der Drehzahlen der Hinterräder verwendet (bei Fahrzeugen mit Zweiradantrieb der Mittelwert der nicht angetriebenen Räder). Die Drehzahl jeden Rads wird durch einen Hall-Sensor gemessen. Der die Drehrate messende Sensor ist als Mikrosystem (MEMS) ausgelegt und zusammen mit den Beschleunigungssensoren in einem von der Motorsteuerung (ECU) getrennten Sensor-Cluster-System untergebracht.

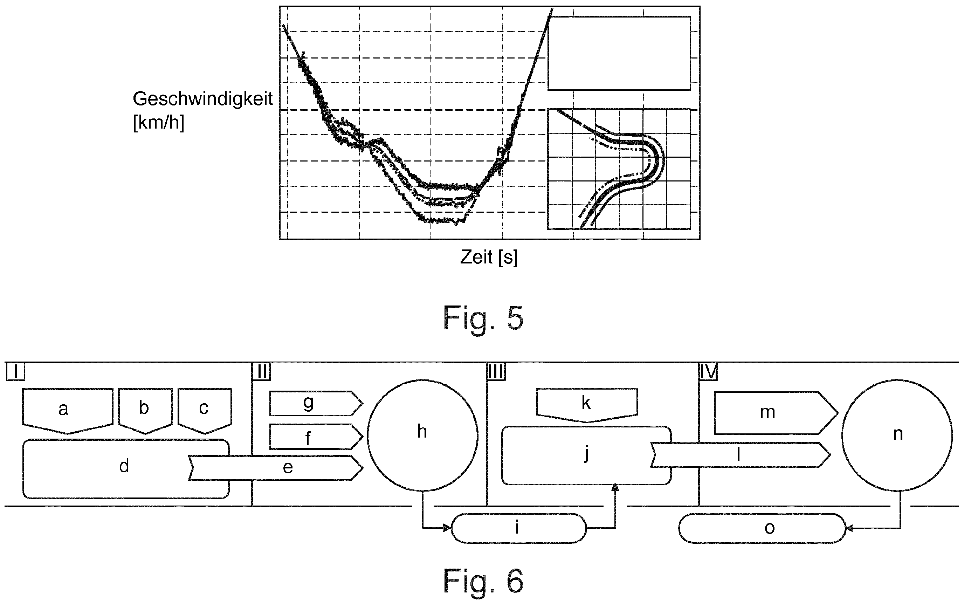

Zur Positionsbestimmung mit CAN-Bus-Daten: Obwohl die Fahrzeugsensorsysteme primär in den verschiedenen Systemen zur Kontrolle und Steuerung des Fahrzeugs angewendet werden, eignen sich einige der von ihnen übermittelten Daten auch gut zur Positionierung. So können unter Verwendung der Drehrate $\dot{\psi}$ und einer mittleren Fahrzeuggeschwindigkeit v, relative Positionsänderungen (Koppelnavigation, DR) des Fahrzeugs berechnet werden. Da die Geschwindigkeiten der einzelnen Räder gemessen werden, könnten ferner mittels differentieller Odometrie Richtungsänderungen berechnet werden. Bei einer Linkskurve müssen die rechten Räder weiter und somit schneller fahren als die linken. Dies ist aus Fig. 5 ersichtlich, wo das Fahrzeug einen großen Kreis durchfuhr. Die Geschwindigkeitsdifferenz ist dem Kurvenradius umgekehrt proportional und beträgt im obigen Beispiel ungefähr 3 km/h.

Die Fig. 5 zeigt die Geschwindigkeiten der einzelnen Räder in diesem Kreis. Von unten nach oben bedeuten die Linien: Geschwindigkeit linkes Rad, mittlere Geschwindigkeit, Referenz-Geschwindigkeit, Geschwindigkeit rechtes Rad. Die unten rechts in Fig. 5 eingesetzte Grafik gibt einen räumlichen Überblick des Kreises, wobei die Gitterquadrate jeweils 20x20 m entsprechen, die links strich-punktierte Linie dem linken Rad und die rechts durchgezogene Linie dem rechten Rad entspricht.

Die gemessene Drehrate $\dot{\psi}$ beschreibt relative Richtungsänderungsraten des Fahrzeugs zwischen Beobachtungszeiten. Durch Integration dieser Drehraten kann bei Kenntnis einer anfänglichen Fahrtrichtung 0 ein absoluter Fahrtrichtungswert berechnet werden, der jedoch auf Grund der unvermeidlichen Aufsummierung kleiner Drehraten-Messfehler einer signifikanten Drift unterliegt. Das Abdriften auf Grund einer ständig zunehmenden Abweichung des durch Aufaddieren kleiner Messwerte zu einem fehlerfreien Bezugswert erhaltenen Ergebnisses tritt bei relativen Positionierungen, wie der Koppelnavigation (DR), allgemein ein und ist auch zu erwarten.

Bei absoluten Messtechniken (wie dem oben beschriebenen Fingerprinting) erfolgt normalerweise kein Abdriften, jedoch ist bei kurzfristiger Positionierung ein Relativerfahren wesentlich präziser. Zur Reduzierung von Fehlern wird deshalb erfindungsgemäß eine Kombination absoluter und relativer Systeme verwendet.

Im Folgenden wird das Filtern von Positionen in Hinblick auf die Positionierung von Fahrzeugen beschrieben. Nach einer absoluten Positionierung durch Fingerprinting (oder im Außenbereich durch GNSS-Einzelpunkt-Bestimmung), wie oben beschrieben, besteht der nächste Schritt in einer Kombinierung mit den aus den CAN-Bus-Daten bzw. dem jeweiligen Fahrzeugdatenbus erhaltenen Daten der relativen Positionierung.

Wir beschreiben eine Ausführungsform mit zwei Kalman-Filtern. Um die Auswirkungen verfügbarer Map-Daten zu zeigen, wird auch ein Partikelfilter eingebaut, um das Parkhaus-Layout in der Positionierung einbeziehen zu können.

Fig. 6 zeigt ein Schema einer Einrichtung für Kalman-Filterung.

Kalman-Filter werden allgemein zur Navigation eingesetzt. In der vorliegenden Erfindung werden sie zur Kombination absoluter und relativer Positionsdaten genutzt, da eine ausschließlich absolute oder relative Positionierung keine zufriedenstellenden Ergebnisse liefert. Absolute Positionsdaten sind mit einem hohen Rauschpegel behaftet und relative Daten werden meist durch Abdriften beeinträchtigt. Ein durch Kombination beider Datentypen erhaltenes Ergebnis profitiert sowohl von der langfristigen Stabilität der absoluten Positionierung als auch der kurzfristigen Präzision des relativen Verfahrens.

Zur besseren numerischen Stabilität und zur Vereinfachung der Einrichtung wurden zwei Kalman-Filter eingesetzt, ein Fahrtrichtungsfilter zur Berechnung der Fahrzeugorientierung in jedem Zeitbereich bzw. zu jeder Epoche und ein darauf aufbauendes Positionsfilter, das den gefilterten Fahrtrichtungswert übernimmt und gemeinsam mit absoluter Position und relativer Positionsänderung die Position bzw. Bahn des Fahrzeugs berechnet. Dieses Verfahren wird durch Fig. 6 veranschaulicht. Die beiden Kalman-Filter sind als Kreise und die von ihnen ausgegebenen Ergebnisse als abgerundete Rechtecke dargestellt. Die einzelnen Komponenten dieses Flussdiagramms werden in den nachstehenden Abschnitten genauer beschrieben. Dabei bedeuten in Fig. 6:

a: Absolute Koordinaten
b: Drehrate
c: Fahrzeuggeschwindigkeit
d: Berechnung des Fahrtrichtungs-Absolutwerts
e: absolute Fahrtrichtung
f: Drehrate
g: Fahrzeuggeschwindigkeit
h: Fahrtrichtungsfilter
i: gefilterte Fahrtrichtung
j: Berechnung der Geschwindigkeitskomponenten
k: Fahrzeuggeschwindigkeit
l: Geschwindigkeitskomponenten
m: absolute Koordinaten
n: Positionsfilter
o: gefilterte Koordinaten

1) Fahrtrichtungsfilter: Es hat die Aufgabe, für das Fahrzeug für jeden Zeitbereich bzw. für jede Epoche einen Absolutwert der Fahrtrichtung zu berechnen. Unter den gegebenen beobachteten Daten findet sich kein direkter Messwert der absoluten Fahrtrichtung, kann jedoch durch Subtraktion absoluter Positionskoordinaten aufeinanderfolgender Zeitbereiche erhalten werden:

$$\psi(t_k) = \arctan \frac{y(t_k) - y(t_{k-1})}{x(t_k) - x(t_{k-1})}.$$

Die Koordinaten x, y sind entweder GNSS-Koordinaten (Außenbereich-Fall) oder wurden mittels Fingerprinting (Innenbereich-Fall) erhalten. Es sind jedoch wegen der mangelnden Präzision des Fingerprintings einige Aspekte zu berücksichtigen. Insbesondere wird für den Fall, dass der Positionsfehler größer ist, als die aktuelle Koordinatendifferenz zwischen zwei aufeinanderfolgenden Zeitabschnitten, wohl kaum ein bedeutsamer Wert für die Fahrtrichtung erhalten. Zur Vermeidung dieses Problems müssen zur Richtungsbestimmung zwei räumlich weiter voneinander entfernte Punkte verwendet werden. Mit zunehmendem Abstand wird der Einfluss der Positionsfehler geringer. Jedoch ist diese Methode nur erfolgreich, wenn sich die Fahrtrichtung $\psi$ zwischen den beiden Punkten nicht ändert. Die Anzahl der Zeitabschnitte muss deshalb je nach Kurvenverlauf der gefahrenen Strecke verschieden gewählt werden. Der Krümmungswert wird durch die Drehrate $\dot{\psi}$ geliefert. Die Änderung der Fahrtrichtung $\Delta\psi$ zwischen zwei Zeitabschnitten $t_{k-n}$ und $t_k$ wird durch folgende Formel berechnet:

$$\Delta\psi = \Delta t(t_{k-n}, t_k) \cdot \sum_{i=0}^{i \le n} \dot{\psi}(t_{k-i}).$$

Der Wert für n wird willkürlich gewählt, jedoch hinreichend groß. Übertrifft für einen gegebenen Zeitabschnitt der aktuelle Wert von $|\Delta\psi|$ einen gewissen Grenzwert, so wird für das entsprechende i die Fahrtrichtung im Zeitabschnitt $t_k$ zwischen den Punkten $P(t_k\text{-}_l)$ und $P(t_k)$ berechnet. Dies funktioniert gut für gerade Streckenabschnitte, in Kurven jedoch kann eine Verringerung des Abstands zwischen den beiden Punkten nicht vermieden werden, womit wiederum für die Fahrtrichtung ein unzuverlässiges Ergebnis erhalten wird. Die Anwendung eines Modells, in dem die theoretische Standardabweichung $\sigma_\psi$ vom Abstand zwischen den beiden Berechnungspunkten abhängt, reduziert die Auswirkung einer schlechten Fahrtrichtung im Filterverfahren. Als zusätzliche Auflage für die Fahrtrichtungsberechnung wird angenommen, dass für kleinere Fahrzeuggeschwindigkeiten höhere Standardabweichungen anzusetzen sind. Im Extremfall einer Geschwindigkeit v = 0 würde dann für die Fahrtrichtung ein erwartetes Ergebnis innerhalb des Bereichs $0° \le \psi \le 360°$ erhalten und der berechnete Fahrtrichtungswert verworfen werden.

Im nächsten Schritt wird dann der so erhaltene Absolutwert der Fahrtrichtung (in Fig. 6 als absolute Fahrtrichtung, e, bezeichnet) zusammen mit der gemessenen Drehrate als Eingabe bzw. Eingangsgröße für den Fahrtrichtungs-Kalman-Filter genommen. Wiederum wird das Filterungsverfahren durch den Wert der Fahrzeuggeschwindigkeit zusätzlich eingeschränkt, da die aktuelle Fahrtrichtung bei unbewegtem Fahrzeug (das heißt für v = 0) konstant bleiben soll.

2) Positionsfilter: Nach erfolgreicher Berechnung der Fahrtrichtung $\psi$ kann die Filterung der Fahzeugposition vorgenommen werden. Das Positionsfilter basiert auf den absoluten Koordinaten (die entweder durch Fingerprinting oder GNSS-Einzelpunkt-Bestimmung erhalten werden) und den durch Fahrtrichtung und Geschwindigkeit des Fahrzeugs gegebenen relativen Positionsänderungen. Die über den CAN-Bus erhaltene Fahrzeuggeschwindigkeit ist im Fahrzeugkoordinatensystem gegeben. Die Transformation auf die Achsen des erdfesten Koordinatensystems erfolgt mittels:

$$v_x(t) = v(t) \cdot \cos\psi(t)$$

$$v_y(t) = v(t) \cdot \sin\psi(t).$$

Analog zur geodätischen Nomenklatur bezeichnet x die Ordinate (Nord-Achse) und y die Abszisse (Ost-Achse). In Fig. 6 wird auf vx und vy als Geschwindigkeitskomponenten, 1, Bezug genommen.

Durch Einbeziehung dieser Geschwindigkeitskomponenten in das Positionsfilter werden die verrauschten absoluten Positionen durch Glättung örtlicher Ausreißer verbessert. Andererseits wird die in den Relativmessungen enthaltene Drift durch die Daten der Absolutpositionierung abgeschwächt. Ein weiterer wichtiger Aspekt der Filterung vielfacher Messdaten-Gruppen ist die Tatsache, dass das Filter bei Ausfall einer Gruppe (z. B. GNSS vorübergehend nicht verfügbar) weiterhin brauchbare Ergebnisse liefern kann. Werden jedoch nur Daten relativer Positionierung berücksichtigt, so ist auf Grund systematischer Fehler der Sensoren ein Abdriften der Lösungen zu erwarten.

Das in der vorliegenden Erfindung bevorzugt benutzte Partikelfilter wird als ein zweistufiges Rao-Blackwell-Verfahren betrieben. Hierbei erfolgt die Messung der Höhenkomponente als Detektion des Parkhaus-Bodens, was, da es nur einen Ein- und Ausgang zum unteren Halbstock des Parkhauses gibt, problemlos ist. Die Abschätzung der Position auf diesem Boden erfolgt dann durch ein zweidimensionales Partikelfilter unter Nutzung eines Grundrisses der aktuell genutzten Bodenfläche. Der GebäudeGrundriss wird als binäre Gitternetzkarte gegeben, auf der unbelegter bzw. freier Raum den Wert 0 und belegter Raum (Wände usw.) den Wert 1 haben.

Nach der Initialisierung der Partikel umfassen die grundlegenden Schritte eines Partikelfilters die räumliche Fortpflanzung der Partikel, die Berechnung der Gewichte (Importance Weights) und die Wahl passender Partikel (Resampling) nach ihrem tatsächlichen Gewicht.

Die Partikelfortschreibung wird nur aus den CAN-Bus-Daten, das heißt aus Drehrate und Fahrzeuggeschwindigkeit, berechnet. Unter der Annahme einer Normalverteilung der Fehler erfolgt die Fortschreibung aller Partikel nach

$$\dot{\psi}'_t = \dot{\psi}_t + N(0, \sigma_{\dot{\psi}})$$

und

$$v'_t = v_t + N(0, \sigma_v).$$

Das Gewicht (Importance Weight) der Partikel wird aus dem der Bluetooth-Fingerprinting-Lösung entsprechenden Gewicht und dem berechneten Map-Gewicht abgeschätzt:

$$\omega^i = <\omega^i_{BLE}, \omega^i_{map}>.$$

Die Abschätzung des Map-Gewichts $\psi_{map}$ basiert auf einer Plausibilitätsprüfung hinsichtlich der Gitternetzkarte des Parkhaus-Grundrisses (ob die Position des Partikels plausibel, d.h. frei ist) und einer Wand-Kollisionsprüfung für den Prädiktionspfad des Partikels. Gemäß der für den Gebäudegrundriss gegebenen Gitternetzkarte kann $\omega_{map}$ somit die Werte 0 oder 1 annehmen.

Auf Grundlage der aktuellen und späteren Wahrscheinlichkeit wird die Position dann mit dem gewichteten Mittelwert aller gültigen Partikel bestimmt. Letztlich werden die Partikel zufallsbedingt im Verhältnis zu den Gewichten $\omega^j$ einer Neuverteilung unterworfen.

Bei zwei durchgeführten Testszenarien wurden die folgenden Ergebnisse erreicht. Die erste Testbahn beginnt außerhalb des Parkhauses und wird dann im Inneren des Gebäudes fortgesetzt. Diese Bahn weist einen Übergang vom Außen- zum Innenbereich auf, weshalb auf jedem ihrer Teile entweder GNSS- oder BLE-Signale verfügbar sind. Die zweite Testbahn verwendet die in Fig. 3 gezeigte Strecke. Sie ermöglicht einen direkten Vergleich zwischen Kalman-Filter und Partikelfilter.

Der erste Test verfolgte den Weg eines Fahrzeugs von der anliegenden Straße zu einem Parkplatz im Inneren eines öffentlichen Parkhauses. Die geplante Strecke weist somit sowohl einen Außenbereich-Abschnitt (mit GNSS Empfang) als auch einen Innenbereich (kein GNSS aber BLE-Empfang) und den nahtlosen Übergang zwischen beiden auf. Da die Fingerprinting Radio-Map ursprünglich auf dem 5. Stock erstellt wurde, wurde sie für den vorliegenden Test auf das Erdgeschoss übertragen. Dies ist möglich, da das allgemeine Layout auf allen Stockwerken dasselbe ist. Trotzdem beeinträchtigt diese Umlegung auf Grund der verschiedenen typischen Parkplatzauslastungen die Genauigkeit, jedoch sind die Daten weiterhin verwendbar.

Der Übergang zwischen Außen- und Innenbereich verläuft hinsichtlich des Signalempfangs glatt, das heißt, insbesondere BLE wird in der Nähe des Parkhauses auch außen empfangen. Dies ist jedoch nicht hilfreich, da die berechnete Position wegen der Art des Fingerprinting-Algorithmus zwangsweise innerhalb der konvexen Hülle der Bezugspunkte liegt. Andererseits könnten GNSS-Signale im Innern des Gebäudes empfangbar bzw. sichtbar sein, werden jedoch wahrscheinlich durch Mehrwege-Effekte beeinträchtigt. Um solchen vorhersehbaren Fehlerquellen entgegenzuwirken, wurden zwei Regeln definiert und implementiert:

1) Fingerprinting wird nur berücksichtigt, wenn eine gefilterte Position innerhalb der konvexen Hülle der Fingerprinting-Bezugspunkte liegt.

2) Sobald Bedingung 1 erfüllt und die Gültigkeit von Fingerprinting gesichert ist, werden GNSS-Beobachtungen (falls vorhanden) vernachlässigt, da für sie wegen Mehrweg-Effekten hohe Ungenauigkeit zu erwarten ist.

Für eine Übergabe von einer Positionierungsmethode im Innenbereich zu jener im Außenbereich müssen die Regeln auf solche Weise adaptiert werden, dass das Fahrzeug in der Lage ist, den Bereich der Bezugspunkte zu verlassen. Dies kann erreicht werden, indem bei Annäherung an die Hülle der Bezugspunkte dem Fingerprinting ein geringeres Gewicht beigemessen wird.

Es können die Eigenschaften individueller Lösungen erkannt werden. GNSS-Einzelpunkt-Bestimmung liefert Fehler in der Größenordnung mehrerer Meter, mit instabilen Lösungen im Gebäude-Nahbereich. Sie liefert insgesamt eine verrauschte Trajektorie mit schlechter Kurzzeitstabilität. Gleiches, jedoch in größerem Umfang, gilt auch für BLE-Fingerprinting.

Im Vergleich zu den in Fig. 4 gezeigten Ergebnissen, wird die Präzision wegen der Verlegung der gesamten Testeinrichtung vom 5. Stock in das Erdgeschoss, ohne Neuaufnahme der zugehörigen Radio-Map, zusätzlich beeinträchtigt. Andererseits ergibt die Verarbeitung der CAN-Daten mittels Koppelnavigation eine gleichmäßige Bahn sehr hoher Kurzzeitpräzision. Jedoch driftet diese Bahn durch Kumulieren systematischer Sensorfehler und Messfehler kontinuierlich von der tatsächlich gefahrenen Bahn weg.

Durch Kombination der absoluten (GNSS oder Fingerprinting) und der relativen (Koppelnavigation) Positionierung mittels eines Kalman-Filters werden die Vorteile beider Methoden kombiniert. Das Filter ermöglicht auch einen nahtlosen Übergang zwischen Außen- und Innenbereich, da Bereiche, in denen die Absolutpositionierung schlecht (oder im Extremfall nicht) funktioniert, durch den Präditkionsschritt des Filters und die durchgehend verfügbaren CAN-Daten überbrückt werden kann.

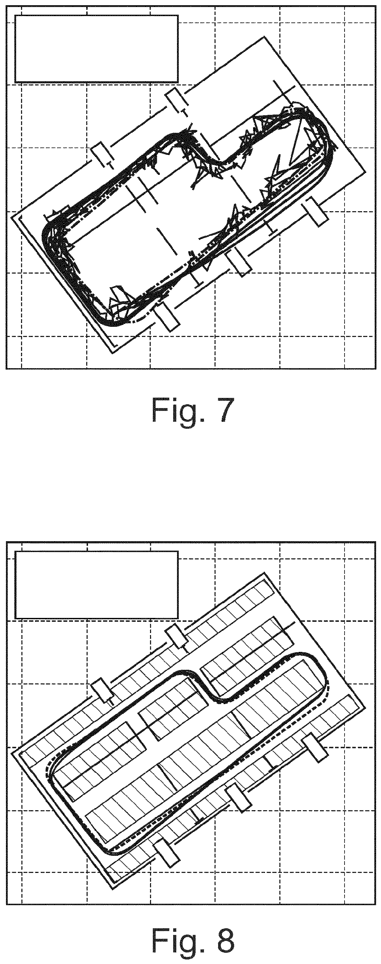

Der zweite Test weist eine ausschließlich im Innenbereich verlaufende Strecke auf, entlang derer teilweise Referenzmessungen verfügbar sind, und einen Vergleich eines Kalman-Filters mit einem einfachen Partikelfilter ermöglicht. Die Prüfstrecke ist die gleiche wie die in Fig. 3 gezeigte, mit drei aufeinanderfolgenden Runden im 5. Stock des Parkhauses. Um die Ergebnisse vergleichbar zu machen, benutzt jedes Filter die gleichen Messdaten. Die Ergebnisse der Positionierung mit Kalman-Filter (Fig. 7) und Partikelfilter (Fig. 8) sind in Fig. 7 und 8 gezeigt. Die Ergebnisse nach der Filterung sind jeweils als durchgezogene glatte Linie eingezeichnet. Die zackig verlaufende Linie in Fig. 7 zeigt die Ergebnisse nach Fingerprinting, ohne Koppelung mittels Filter.

Im Gegensatz zum Ergebnis des Kalman-Filters, kann die Berücksichtigung des Gebäude-Layouts im Partikelfilter-Algorithmus als eine Reduktion auf dem Gebäudeplan entsprechende plausible Trajektorien betrachtet werden (kein Schneiden von Wänden bzw. kein Fahren durch Wände etc.). Obwohl dies im Wesentlichen auch für die Ergebnisse des Kalman-Filter zutrifft, gibt es dort keine ausdrücklichen Zwänge, welche das Filter daran hindert, solche Hindernisse zu schneiden. Im Filter-Algorithmus berücksichtigte Wände sind durch dicke schwarze Linien dargestellt.

Die in Fig. 8 schraffiert gezeichneten Flächen zeigen zur Veranschaulichung die Parkbereiche des Parkhauses. Die Möglichkeit einer Einbeziehung der Parkbereiche in das Partikelfilter wird unten beschrieben.

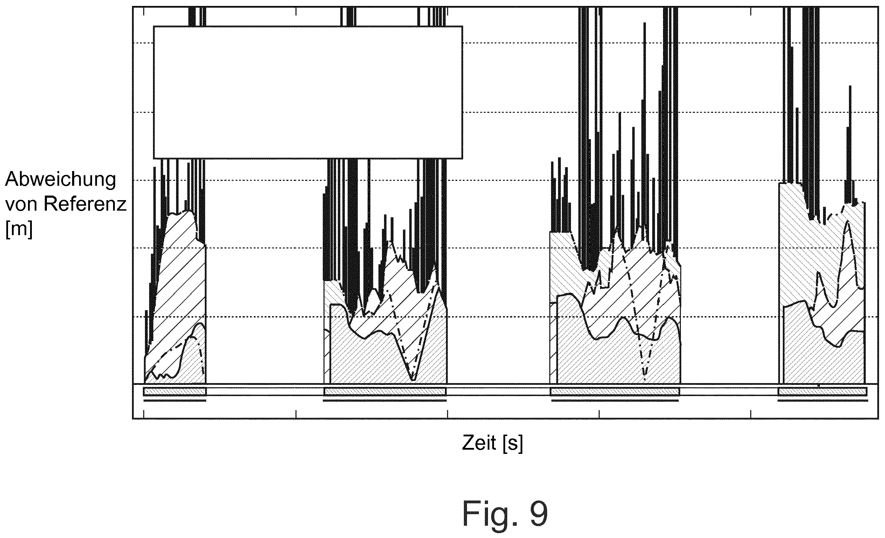

Die Positionierungsfehler sind in Fig. 9 zusammengefasst. Dabei bedeuten die unterste, eng nach rechts oben strichlierte Fläche die Abweichungen des Partikelfilters, die darüberliegende weit nach rechts oben strichlierte Fläche Abweichungen des Kalmanfilters, die darüberliegende nach rechts unten strichlierte Fläche Abweichungen der Koppelnavigation und die oben liegenden Balken Abweichungen der Fingerprinting-Positionsbestimmung.

Die verrauschten Ergebnisse des BLE-Fingerprinting und das durch systematische Fehler bedingte Abdriften der Koppelnavigation sind ersichtlich. Bei hoher Präzision zu Beginn der Testfahrt nehmen die Fehler im Folgenden ständig zu. Dieses Verhalten wird durch die eingesetzten Filter gemindert, wobei das Partikelfilter bessere Ergebnisse als das Kalman-Filter liefert.

Die mittleren Fehler der individuellen Positionierungsmethoden sind in der folgenden Tabelle gelistet.

| Methode | #1 | #2 | #3 | #4 | Durchschnitt |
|---|---|---|---|---|---|
| Fingerprinting | 4,81m | 5,02m | 4,89m | 4,98m | 4,93m |
| Koppelnavigation | 0,86m | 2,16m | 3,35m | 5,28m | - |
| Kalman-Filter | 3,77m | 2,54m | 3,29m | 2,41m | 3,00m |
| Partikelfilter | 0,81m | 1,55m | 1,76m | 1,74m | 1,47m |

Die als # 1 bis #4 gekennzeichneten Spalten enthalten den mittleren Fehler für den speziellen, mit Referenzmessungen überwachten Streckenabschnitt (siehe Fig. 9). Die Spalte ganz rechts enthält den mittleren Fehler der vier gezeigten Bereiche. Da bei der Koppelnavigation eine ständige Zunahme des Fehlers vorliegt und das Mittel daher nicht stationär ist, wird es nicht angegeben. Insgesamt kann festgestellt werden, dass die beiden eingesetzten Filter die Präzision von Fingerprinting oder Koppelnavigation verbessern können, wobei das Partikelfilter jedoch in allen Tests besser abschneidet als das Kalman-Filter und mittlere Positionierungsfehler kleiner als 2 m liefert.

Erfindungsgemäß wurde somit festgestellt, dass Daten von Fahrzeugsensorsystemen und Positionierungsdaten von externen Quellen, wie BLE-Fingerprinting, kombiniert werden können, um ein präziseres Positionierungsergebnis zu liefern, als durch jede Technik für sich allein erhalten werden könnte.

Jeder der vorgestellten Filteralgorithmen ist sehr elementar umgesetzt und könnte zur Leistungssteigerung weiter ausgebaut werden. So könnte das Kalman-Filter zum Beispiel durch eine innerhalb des Filters direkt erfolgende Abschätzung und Kompensierung systematischer Sensorfehler verbessert werden.

Das angewendete Partikelfilter kann strukturelle Begrenzungen, wie Wände innerhalb des Parkhauses, erfolgreich einbeziehen. Jedoch wird in einer typischen Parkeinrichtung nur ein geringer Teil des verfügbaren Raums als Verkehrsweg für die Fahrzeuge genutzt, da der Großteil zum Parken vorgesehen ist und jedes Fahren auf ihm, mit Ausnahme der Parkmanöver, unwahrscheinlich ist (siehe Fig. 8). Man könnte deshalb eine Gitternetzkarte schaffen, die diesem Umstand Rechnung trägt und zum Beispiel Parkbereichen ein Gewicht von 0,5 geben. Dies würde die Wahrscheinlichkeit, dass sich eine bestimmte Position innerhalb der Parkbereiche befindet reduzieren, während jedoch die Möglichkeit der Abbildung eines tatsächlichen Parkmanövers erhalten bliebe. Bei einem autonomen Parkpiloten könnte dann eine Gitternetzkarte auf Grundlage des dem Fahrzeug vom Parkhauscomputersystem zugewiesenen Parkplatzes erstellt werden (die zugewiesene Parkfläche erhält ein Gewicht von 1).

Das untersuchte, mit BLE Location-Fingerprinting und CAN-Bus-Daten sowie mit Kalman- oder Partikelfilter arbeitende System kann beispielsweise auch ein auf Kameras basierendes optisches System, insbesondere in Bereichen in denen die Verarbeitung der Bilddaten nicht oder nicht gut funktioniert, ergänzen.

**Patentansprüche**

1. Positionsbestimmungssystem, zur Bestimmung der Position eines Fahrzeuges in einem Innenraum, umfassend einen mit dem Fahrzeug beweglichen Bluetooth-Empfänger (1), eine Anzahl von im Innenraum verteilten Bluetooth-Sendern (2) und eine Positionsbestimmungsvorrichtung, wobei die Positionsbestimmungsvorrichtung dazu eingerichtet ist, eine Absolutposition des Fahrzeuges durch eine Analyse des am Bluetooth-Empfänger (1) empfangenen Signals der Anzahl von im Innenraum verteilten Bluetooth-Sender (2) zu bestimmen, eine Relativposition des Fahrzeuges mittels Sensorwerten der Dynamik des Fahrzeugs zu bestimmen und eine Gesamtposition des Fahrzeuges als Kombination der Absolutposition und der Relativposition zu bestimmen.

2. Positionsbestimmungssystem nach Anspruch 1,
**dadurch gekennzeichnet, dass** die Sensorwerte der Dynamik des Fahrzeugs eine Gierrateninformation und / oder eine Geschwindigkeitsinformation des Fahrzeuges umfassen.

3. Positionsbestimmungssystem nach Anspruch 1,
**dadurch gekennzeichnet, dass** die Sensorwerte der Dynamik des Fahrzeugs aus einem CAN-Bussystem des Fahrzeuges ausgelesen werden.

4. Positionsbestimmungssystem nach zumindest einem der vorhergehenden Ansprüche,
**dadurch gekennzeichnet, dass** die Analyse der empfangenen Signale der Anzahl von im Innenraum verteilten Bluetooth-Sendern (2) einen Vergleich der empfangenen Signalstärke am Bluetooth-Empfänger (1) mit zuvor aufgezeichneten Referenz-Signalstärken an unterschiedlichen vorgegebenen Positionen (3) im Innenraum umfasst.

5. Positionsbestimmungssystem nach zumindest einem der vorhergehenden Ansprüche,
**dadurch gekennzeichnet, dass** die im Innenraum verteilten Bluetooth-Sender (2) Bluetooth-Niedrig-Energie-Sender sind.

6. Positionsbestimmungssystem nach zumindest einem der vorhergehenden Ansprüche,
**dadurch gekennzeichnet, dass** die Kombination der Absolutposition und der Relativposition mittels eines Kalmanfilters oder eines Partikelfilters durchgeführt wird.

7. Positionsbestimmungssystem nach zumindest einem der vorhergehenden Ansprüche,
**dadurch gekennzeichnet, dass** die Kombination der Absolutposition und der Relativposition mittels eines Partikelfilters durchgeführt wird, wobei, zusätzlich zu zumindest einem der Sensorwerte der Dynamik des Fahrzeugs, Rasterkarten als zusätzliche Daten für das Partikelfilter verwendet werden.

8. Positionsbestimmungssystem nach zumindest einem der vorhergehenden Ansprüche,
**dadurch gekennzeichnet, dass** das Positionsbestimmungssystem einen mit dem Fahrzeug beweglichen GNSS-Empfänger umfasst und die Positionsbestimmungsvorrichtung dazu eingerichtet ist, die Position des Fahrzeuges im Freien mittels der vom GNSS-Empfänger empfangenen Daten zu bestimmen und die Position des Fahrzeuges in einem Innenraum als Kombination der Absolutposition und der Relativposition zu bestimmen.

9. Positionsbestimmungssystem nach zumindest einem der vorhergehenden Ansprüche,
**dadurch gekennzeichnet, dass** das Positionsbestimmungssystem einen mit dem Fahrzeug beweglichen GNSS-Empfänger umfasst und die Positionsbestimmungsvorrichtung dazu eingerichtet ist, die Position des Fahrzeuges im Freien mittels der vom GNSS-Empfänger empfangenen Daten kombiniert mit den Sensorwerten der Dynamik des Fahrzeugs zu bestimmen und die Position des Fahrzeuges in einem Innenraum als Kombination der Absolutposition und der Relativposition zu bestimmen.

Fig. 1

Fig. 2

Fig. 3

Abweichung
vom
Bezugswert [m]

Zeit [s]

Fig. 4

Geschwindigkeit [km/h]

Zeit [s]

Fig. 5

Fig. 6

EP 3 232 221 A1

EP 3 232 221 A1

Fig. 7

Fig. 8

16

Abweichung von Referenz [m]

Zeit [s]

Fig. 9

Europäisches
Patentamt

European
Patent Office

Office européen
des brevets

**EUROPÄISCHER RECHERCHENBERICHT**

Nummer der Anmeldung

EP 17 16 4801

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2016/069690 A1 (LI TAO [CA] ET AL) 10. März 2016 (2016-03-10) * Abbildung 1 * * Absatz [0002] - Absatz [0003] * * Absatz [0066] - Absatz [0088] * * Absatz [0157] - Absatz [0165] * ----- | 1-9 | INV. G01S5/02 G01C21/20 ADD. G01S19/48 |
| X | US 2015/119076 A1 (COHEN RONALD H [US]) 30. April 2015 (2015-04-30) * Zusammenfassung * * Absatz [0004] * * Absatz [0021] * * Absatz [0033] - Absatz [0057] * * Absatz [0086] - Absatz [0087] * ----- | 1-9 | |
| X | WO 2012/084322 A1 (BOSCH GMBH ROBERT [DE]; EICKMANN JONAS [DE]; LAMMEL GERHARD [DE]) 28. Juni 2012 (2012-06-28) | 1-7 | |
| A | * Zusammenfassung * * Seite 1, Zeile 10 - Seite 3, Zeile 14 * * Seite 5, Zeile 34 - Seite 8, Zeile 10 * * Seite 10, Zeile 10 - Seite 12, Zeile 10 * ----- | 8,9 | |
| X | WILLEMSEN THOMAS ET AL: "Concept for building a smartphone based indoor localization system", 17TH INTERNATIONAL CONFERENCE ON INFORMATION FUSION (FUSION), INTERNATIONAL SOCIETY OF INFORMATION FUSION, 7. Juli 2014 (2014-07-07), Seiten 1-8, XP032653965, [gefunden am 2014-10-03] * Zusammenfassung * * Abbildung 1 * * Kapitel III * * Kapitel IV * ----- -/-- | 1-9 | |

**RECHERCHIERTE SACHGEBIETE (IPC)**

G01S
G01C

Der vorliegende Recherchenbericht wurde für alle Patentansprüche erstellt

| Recherchenort | Abschlußdatum der Recherche | Prüfer |
|---|---|---|
| München | 7. September 2017 | Haugg, Sabine |

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 17 16 4801

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | LEPPAKOSKI H ET AL: "Pedestrian navigation based on inertial sensors, indoor map, and WLAN signals", 2012 IEEE INTERNATIONAL CONFERENCE ON ACOUSTICS, SPEECH AND SIGNAL PROCESSING (ICASSP 2012) : KYOTO, JAPAN, 25 - 30 MARCH 2012 ; [PROCEEDINGS], IEEE, PISCATAWAY, NJ, 25. März 2012 (2012-03-25), Seiten 1569-1572, XP032227432, DOI: 10.1109/ICASSP.2012.6288192 ISBN: 978-1-4673-0045-2 * das ganze Dokument * ----- | 1-9 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 7. September 2017 | Haugg, Sabine |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
......................................................................................
& : Mitglied der gleichen Patentfamilie, übereinstimmendes
    Dokument

EPO FORM 1503 03.82 (P04C03)

Seite 2 von 2

**ANHANG ZUM EUROPÄISCHEN RECHERCHENBERICHT**
**ÜBER DIE EUROPÄISCHE PATENTANMELDUNG NR.**

EP 17 16 4801

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-09-2017

| Im Recherchenbericht angeführtes Patentdokument | Datum der Veröffentlichung | Mitglied(er) der Patentfamilie | Datum der Veröffentlichung |
|---|---|---|---|
| US 2016069690 A1 | 10-03-2016 | CN 107110651 A<br>EP 3191795 A1<br>KR 20170060034 A<br>US 2016069690 A1<br>WO 2016040166 A1 | 29-08-2017<br>19-07-2017<br>31-05-2017<br>10-03-2016<br>17-03-2016 |
| US 2015119076 A1 | 30-04-2015 | KEINE | |
| WO 2012084322 A1 | 28-06-2012 | CN 103502833 A<br>DE 102010063702 A1<br>EP 2656096 A1<br>JP 5717875 B2<br>JP 2014505241 A<br>KR 20130137015 A<br>US 2013314104 A1<br>WO 2012084322 A1 | 08-01-2014<br>21-06-2012<br>30-10-2013<br>13-05-2015<br>27-02-2014<br>13-12-2013<br>28-11-2013<br>28-06-2012 |

EPO FORM P0461

Für nähere Einzelheiten zu diesem Anhang : siehe Amtsblatt des Europäischen Patentamts, Nr.12/82